# EUROPÄISCHE PATENTSCHRIFT

(11) **EP 0 431 539 B1**
(45) Veröffentlichungstag und Bekanntmachung des Hinweises auf die Patenterteilung: **28.06.1995**
(21) Anmeldenummer: 90123148.0
(22) Anmeldetag: 04.12.1990
(51) Int. Cl.: H04M 1/65

(54) **Teilnehmereinrichtung zur Übertragung zwischengespeicherter Nachrichten über ein Nachrichtennetz für vermittelte Verbindungen**
Subscriber equipment for transmitting temporarily stored information via established connection of a communication network
Equipement d'abonné pour la transmission d'informations temporairement mémorisées le long de liaisons établies d'un réseau de communication

(30) Priorität: 06.12.1989 DE 3940332
(43) Veröffentlichungstag der Anmeldung: 12.06.1991
(73) Patentinhaber: Grundig E.M.V. Elektro-Mechanische Versuchsanstalt Max Grundig GmbH & Co. KG, 90762 Fürth (DE)
(72) Erfinder: Mittelstaedt, Rainer, Grundig E.M.V., Kurgartenstrasse 37, W-8510 Fuerth (DE)

(56) Entgegenhaltungen:
- DE-A- 2 529 560
- DE-A- 2 749 948
- DE-A- 3 104 498
- DE-A- 3 726 402
- DE-A- 3 806 134
- GB-A- 2 075 307
- GB-A- 2 238 208
- US-A- 4 328 397
- US-A- 4 941 168

## Beschreibung

Die Erfindung betrifft eine Teilnehmereinrichtung zur Übertragung zwischengespeicherter Nachrichten über ein Nachrichtennetz für vermittelte Verbindungen gemäß dem Oberbegriff des Patentanspruchs 1.

Moderne Teilnehmereinrichtungen sind meist Gerätekombinationen von verschiedenen Geräten. Diese sind z.B. Anrufbeantworter, Wählautomat, Alarm- und Überwachungsgerät, Terminmelder, Fernschaltgerät und Diktiergerät. Eine solche Teilnehmereinrichtung ist z.B. in der DE-OS 36 08 238 beschrieben, welche eine Vielzahl von Leistungsmerkmalen aufweist, beispielsweise :
- für den Anrufbeantworter die getrennte Zählung von Anrufen und Nachrichten, die Registrierung von Datum und Uhrzeit der Anrufe und Nachrichten, die Fernlöschung abgehörter Nachrichten usw.,
- für den Wählautomaten die Speicherung von Rufnummern, die Kurzwahl, die Zielwahl, die Wahlwiederholung usw.,
- für das Alarm- und Überwachungsgerät die Alarmmeldung über den europäischen Funkrufdienst zu einem Funkrufempfänger oder über das Fernsprechnetz zu einer Teilnehmereinrichtung, die zeitgesteuerte Alarmüberwachung, das Reinhören über ein externes oder im Telefoncomputer eingebautes Mikrofon in den Raum (Babysitterfunktion),
- für das Schalt-/Fernschaltgerät das automatische Einschalten von an den Telefoncomputer angeschlossenen Geräten oder Anlagen, wie z.B. Heizung, Licht, Radio, Fernseher oder Alarmanlage, die Fernabfrage des Schaltzustands usw.,
- für den Terminmelder die Auslösung eines akustischen Signals zu den eingegebenen Terminzeiten und
- für das Diktiergerät die Möglichkeit der Fernbedienung über ein Hand-Diktiergerätemikrofon oder die Freisprechfunktion oder das Mitschneiden von am Fernsprechapparat geführten Gesprächen.

Für die verschiedenen Geräte-Funktionen sind vom Besitzer der Teilnehmereinrichtung sowohl bei der Erst-Inbetriebnahme als auch während des Betriebs eine Vielzahl von Einstellungen, Eingaben usw. vorzunehmen. In der DE-OS 36 08 238 ist die Programmierung des Telefoncomputers im einzelnen näher beschrieben und erläutert, beispielsweise die Eingaben von Datum und Uhrzeit, Alarm- und Terminzeiten, Aufnahmezeit für ankommende Gespräche, Fernabfragecodes, Eurosignalrufnummern oder sonstige Rufnummern, Rufnummern und Amtskennziffern für Kurzwahl, Zielwahl.

Um die Bedienung der verschiedenen Geräte bzw. Gerätefunktionen dem Benutzer zu erleichtern ist im Gerät (Telefoncomputer) eine Steuereinrichtung (Mikroprozessor) angeordnet, wobei über eine Anzeige (häufig LCD-Display) eine Kontrolle der vom Benutzer eingegebenen Daten, des Betriebszustands usw. möglich ist.

In allen Wirtschaftsbereichen, vor allen Dingen im Bürobereich und in der Verwaltung, werden Textinformationen und neuerdings auch Bildinformationen erfaßt, bearbeitet, archiviert und zu einem Empfänger übertragen. Moderne Teilnehmereinrichtungen sind dabei in allen Bürobereichen zu einem wichtigen Hilfsmittel beim Abwickeln der vielfältigen und unterschiedlichen Aufgaben geworden.

Durch die Konfiguration von Mehrplatzsystemen und deren Einbindung in private, lokale und öffentliche Kommunikationsnetze ist der Kommunikationsprozess immer komplizierter geworden. Die Netzanschlüsse der Teilnehmereinrichtungen ermöglichen den Informationsaustausch, insbesondere den papierlosen Transport von Nachrichten, Informationen und Dokumenten, zwischen gleichen und/oder unterschiedlichen Textverarbeitungssystemen, Ablagesystemen, Rechnern usw. über verschiedene Nachrichtennetze für vermittelte Verbindungen. Beispielsweise sind über die Netzanschlüsse Bürokommunikationssysteme auch mit Datenverarbeitungsanlagen verbindbar, so daß eine Integrationsmöglichkeit von Text- und Datenverarbeitung und auch eine Einbindung in ein integriertes Digitalnetz (IDN) oder in ein diensteintegrierendes Digitalnetz (ISDN) gegeben ist. Moderne Teilnehmereinrichtungen können dem Benutzer zwar die Arbeit erleichtern, erfordern jedoch bei der Benutzung spezielle Kenntnisse und viel Erfahrung. Dies gilt besonders für die ständig wachsenden Kommunikationsaufgaben, z.B. im Büro und in der Verwaltung, die Funktionsvielfalt und die neuen Anwendungsmöglichkeiten.

Aus der DE-PS 29 51 550 ist eine Anordnung zur Ferneinschaltung und Fernabschaltung von elektrischen Geräteeinheiten, insbesondere Rechenanlagen, bekannt. Eine Zentralstation ist über eine Standard-Schnittstellenübertragungssteuerung, ein Modem und eine Standard-Fernmeldeleitung und/oder Standard-Datenleitung mit den Außenstationen zur Datenfernübertragung verbindbar. Hierzu wird beispielsweise von einer automatischen Wähleinrichtung des Zentralrechners eine Verbindung zum Modem der Außenstationen aufgebaut. Ist die Verbindung zwischen den beiden Modems hergestellt und ist in der Zentralstation vom Modem der Außenstation ein Bestätigungssignal empfangen worden, so werden vom Zentralrechner digitale Steuersignale und Nachrichten abgegeben. Diese gelangen zu einer in der Außenstation nach dem Modem angeordneten, ferngesteuerten Stromversorgungseinrichtung. Die Zentralstation erzeugt und sendet dabei eine sich selbst und die einzuschaltende Geräteeinheit kennzeichnende, codierte Nachricht (Zustandsmeldungsaufforderung) aus. Zur Überprüfung der Verfügbarkeit der Geräteeinheiten muß die Zustandsrückmeldung bestätigt werden, wozu die von der Zentralstation an die Außenstation gesendete Nachricht in der Außenstation einem Zeitgeber zugeführt wird. Der Zeitgeber trennt die Verbindung zwischen Außenstation und Zentralstation, wenn nicht innerhalb der vorgegebenen Zeitspanne die Verfügbarkeit feststellbar ist. Hierzu enthält die Außenstation einen eine vorgegebene Signalfolge (Nachricht) erzeugenden, programmierbaren Festwertspeicher, sowie einen Komparator, der die empfangene codierte Signalfolge (Nachricht) mit jener des Festwertspeichers vergleicht. Ist innerhalb des vorgegebenen Zeitintervalls von beispielsweise 100 ms eine Übereinstimmung bei allen Zeichen feststellbar, so wird die Stromversorgungseinrichtung der Außenstation eingeschaltet.

Mit einer solchen Anordnung ist es möglich, die auf Magnetband, Magnetplatte, Lochstreifen oder -karten, Floppydisk usw. aufgezeichneten Daten dann zu übertragen - z.B. in der Nacht oder an den Wochenenden - wenn die Verkehrsbelastung der Nachrichtennetze nicht so hoch ist und die Gebühren relativ niedrig sind. Weiterhin werden die Rechenanlagen, bzw. Geräteeinheiten, in den Außenstationen nur dann eingeschaltet, wenn eine Datenfernübertragung stattfinden soll.

Außerdem ist aus der DE-OS 37 21 047 ein Kommunikationssteuerverfahren bekannt, bei dem in einem ersten Verfahrensschritt eine Verbindung über das öffentliche Fernsprechnetz zwischen einer rufenden Station und einer gerufenen Station hergestellt wird. In einem zweiten Verfahrensschritt wird der Übertragungsmode ausgewählt, um eine Übertragung von Nachrichten zwischen Telefonapparaten, Teletex-Geräten, Personal-Computern, Faksimile-Geräten oder ähnlichem zu ermöglichen. Das Verbund-Kommunikationsendgerät enthält unter anderem eine Systemsteuereinheit, welche den Betrieb des gesamten Verbund-Kommunikationsendgeräts steuert und welche verschiedene Kommunikations- und Übermittlungsfunktionen, bzw. verschiedene Datenverarbeitungsoperationen abwickelt. Weiterhin sind ein Coder/Decoder vorgesehen, welche eine Datenreduktion bzw. Datenexpansion der Bildinformationen vornehmen. Außerdem weist das Verbund-Kommunikationsendgerät eine Kommunikationssteuereinheit auf, welche die Kommunikations-Prozedurschritte in verschiedenen Kommunikationsmoden, wie beispielsweise eine Faksimile-, eine Teletex- und eine PC-Kommunikation, durchführen kann. Ein Modem moduliert ein zu übertragendes Signal, demoduliert ein empfangenes Signal für eine weitere Verarbeitung und führt eine Analog-Digital- bzw. Digital-Analog-Umsetzung durch. Weiterhin kann das Modem in verschiedenen Moden betrieben werden, welche für die verschiedenen Übertragungsfunktionen erforderlich sind.

Schließlich ist aus der DE-PS 21 59 848 ein Textverarbeitungssystem mit einer Anzahl peripherer Diktateingabestellen bekannt, bei dem zur Diktatübertragung die Diktateingabestellen über eine Vermittlungseinrichtung mit einem zentralen Schreibbüro in Verbindung stehen. Im zentralen Schreibbüro werden die aufgezeichneten Diktate abgehört und in geschriebenen Text umgesetzt. Um die von verschiedenen Diktateingabestellen stammenden Diktate bzw. die von der gleichen Diktateingabestelle kommenden verschiedenen Diktatabschnitte zu kennzeichnen, weist jede Diktateingabestelle einen Kennungsgeber auf. Dieser versieht jeden eingegebenen Diktatabschnitt (eines abschnittsweise diktierten Diktats) mit einer Kennung. In der zentralen Schreibstelle erfolgt dann das Sortieren und Zusammenfügen der einzelnen Textabschnitte zum vollständigen Text anhand der den einzelnen Diktatabschnitten zugeordneten Kennungen. Um eine unmittelbare Überprüfung des in Text umgesetzten und abgespeicherten Diktats an der Diktateingabestelle zu ermöglichen, weist jede Diktateingabestelle einen Anzeigebildschirm auf. Die Nachrichtenübertragung von Diktat und Text zwischen Diktateingabestellen und zentraler Schreibanlage erfolgt in dem speziell ausgestalteten privaten Nachrichtennetz.

Mit den verschiedenen Systemen (Bürokommunikationssystemen bzw. Textverarbeitungssystemen) ist es möglich, zu einem beliebigen Zeitpunkt eine Verbindung über ein Nachrichtennetz zu einer bestimmten Teilnehmerstation bzw. einem bestimmten Gerät aufzubauen und eine Datenfernübertragung einzuleiten bzw. zu steuern. Diese Systeme sind in der Regel jedoch ganz speziell an die Anforderungen der Anwender angepaßt, die hierzu erforderlichen Steuereinrichtungen sind in der Regel sehr aufwendig und bieten dennoch keinen hohen Benutzerkomfort. In der Regel muß die Datenfernübertragung von einer Bedienperson eingeleitet, überwacht und gesteuert werden.

Im Hinblick darauf ist es anzustreben, eine Teilnehmereinrichtung zur Übertragung zwischengespeicherter Nachrichten über ein Nachrichtennetz für vermittelte Verbindungen derart auszugestalten, daß sich der Benutzer auch ohne spezielle Kenntnisse die von der Technik bereitgestellten Möglichkeiten für seine Aufgaben und Anwendungen nutzbar machen kann. Dies ist dann sichergestellt, wenn die verschiedenen Funktionen und hierzu erforderlichen Eingabebefehle entweder dem Benutzer an sich bekannt sind oder automatisch ablaufen, z.B. die erforderlichen Steuerbefehle von einem Mikroprozessor automatisch erzeugt werden. Hinsichtlich des Kommunikationsprozesses ist es heute besonders wichtig, Informationen schnell zu erhalten und/oder weiterzureichen, auszuwerten und umzusetzen.

Weiterhin ist aus der DE-A-3 726 402 ein programmierbares Telefon/Diktieranschlußgerät bekannt, bei dem auf Wunsch des Benutzers durch bestimmte programmierbare Tasten die zugeordnete Funktion verändert werden kann. Durch das dort beschriebene spezielle Gerät auf PC-Basis ist unter anderem eine vollautomatische Übertragung zwischengespeicherter Nachrichten ermöglicht.

Schließlich ist aus der DE-A-2 749 948 eine Einrichtung zur Übertragung von Sprache bekannt, bei der eine halbautomatische Übertragung von Diktaten möglich ist. Hierzu stellt der Benutzer die Telefongesprächs-Verbindung her und nach Betätigung eines Umschalters erfolgt mit erhöhter Wiedergabegeschwindigkeit die Nachrichtenübertragung zwischen den beispielsweise in den Fernsprechapparaten oder Fernhörern integrierten Diktiergeräten. Eine automatische Übermittlung des Diktats oder eine hierfür benutzte Steuereinrichtung ist diesem Stand der Technik nicht entnehmbar.

Der Erfindung liegt die Aufgabe zugrunde, eine Teilnehmereinrichtung derart auszugestalten, daß der Kommunikationsprozeß keine speziellen Kentnisse vom Benutzer erfordert und zumindestens die Übermittlung der in der Teilnehmereinrichtung zwischengespeicherten Nachrichten automatisch abläuft.

Diese Aufgabe wird bei einer gattungsgemäßen Teilnehmereinrichtung durch die kennzeichnenden Merkmale der Patentansprüche 1 und 2 gelöst.

Die erfindungsgemäße Teilnehmereinrichtung nach den Patentansprüchen 1 und 2 weist den Vorteil auf, daß der Verbindungsaufbau mit einer in jedem Büro vorhandenen Einrichtung, nämlich dem Fernsprechapparat bzw. Anrufbeantworter, vorgenommen werden kann. Dadurch wird der Kommunikationsprozeß für den Benutzer überschaubar, wobei durch das erfindungsgemäße halbautomatische bzw. automatische Fernkopieren von beispielsweise Sprach- und/oder Datenkassetten der Schaltungsaufwand in der Teilnehmereinrichtung vergleichsweise gering ist. Die für die automatische Übermittlung -der in der Teilnehmereinrichtung zwischengespeicherten Nachrichten- erforderlichen Einrichtungen sind ohnehin in modernen Teilnehmereinrichtungen vorhanden. Dies gilt beispielsweise für die automatische Wähleinrichtung, die Anordnung einer Steuereinrichtung für das Auslesen, Übertragen und Speichern der zwischengespeicherten Nachrichten usw.. Da der Verbindungsaufbau durch den Benutzer der Teilnehmereinrichtung eingeleitet wird, kann eine sonst erforderliche Einrichtung zur Überwachung des Verbindungsaufbaus entfallen.

Weiterhin weist die erfindungsgemäße Teilnehmereinrichtung den Vorteil auf, daß der Benutzer den in der Regel lange dauernden Übertragungsvorgang (bis die vollständige zwischengespeicherte Nachricht zum gerufenen Teilnehmer übertragen worden ist) selbst nicht mehr überwachen bzw. steuern muß. Mit relativ geringem Schaltungsaufwand wird auf überraschend einfache Art und Weise ein hoher Bedienkomfort durch den automatisch ablaufenden Übermittlungsvorgang erreicht.

Die erfindungsgemäße Teilnehmereinrichtung erfordert vom Benutzer für den Kommunikationsprozess keine speziellen Kenntnisse der Prozeduren und erlaubt auf einfache Art und Weise dem Benutzer eine gezielte Umschaltung der Teilnehmereinrichtung in die gewünschte Betriebsart. Zudem können durch regelmäßige Überprüfung, ob die ursprünglich hergestellte Verbindung noch besteht, Betriebsstörungen zuverlässig vermieden werden.

Die Ausführungsform der Teilnehmereinrichtung gemäß Patentanspruch 3 weist den Vorteil auf, daß der Sprachpausenschalter hierbei eine Steuerungsfunktion beim Übermittlungsvorgang übernehmen kann. Moderne Anrufbeantworter weisen ohnehin einen solchen Sprachpausenschalter auf.

Wird gemäß der Ausführungsform nach Patentanspruch 4 beim Informationsaustausch zwischen den beiden Teilnehmereinrichtungen, die diesen Teilnehmereinrichtungen zugeordnete Rufnummer mitübertragen, so kann eine einfache Überprüfung der Zugriffsberechtigung auf die zwischengespeicherten Nachrichten ermöglicht werden.

Wird gemäß der Ausführungsform nach Patentanspruch 5 ein sogenannter VSC-Prozessor (Variable-Speech-Control) eingesetzt, so können die durch die höhere Auslesegeschwindigkeit bedingten Tonhöhenänderungen ausgeglichen werden, so daß die Sprachinformation noch verständlich bleibt.

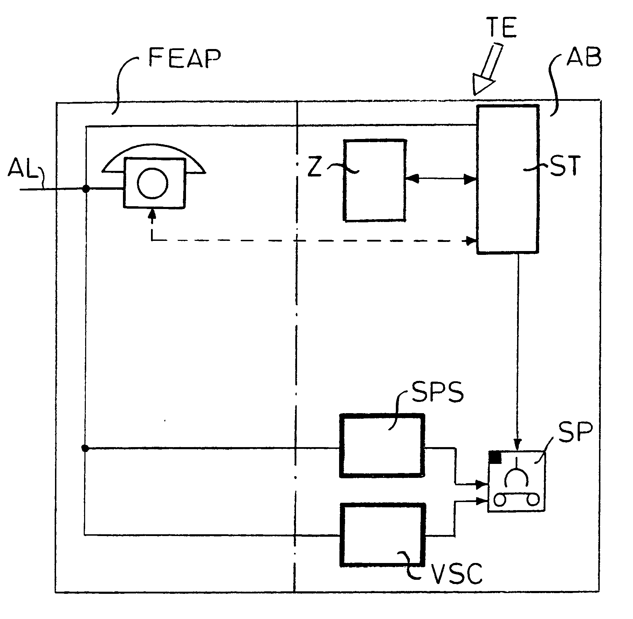

Die Erfindung wird im folgenden anhand einer in der Zeichnung dargestellten Ausführungsform näher beschrieben und erläutert.

Bei der in der Figur dargestellten Ausführungsform der Teilnehmereinrichtung wird von einem Anrufbeantworter ausgegangen. Die erfindungsgemäße Teilnehmereinrichtung kann jedoch zur Vernetzung unterschiedlich ausgestalteter Datenverarbeitungs- und Bürosysteme eingesetzt werden, wobei die Anforderungen für die Steuerung des Informationsaustausches bei unterschiedlichen Netzarchitekturen ohne weiteres berücksichtigt werden können.

Die in der Figur dargestellte Teilnehmereinrichtung TE besteht aus der Kombination von Fernsprechapparat FEAP und Anrufbeantworter AB und steht über die Hauptanschlußleitung AL mit dem Fernmeldenetz in Verbindung. In der Teilnehmereinrichtung TE ist eine Steuereinrichtung ST angeordnet, welche die verschiedenen Funktionen der Teilnehmereinrichtung TE und den Austausch vermittlungstechnischer Informationen ( z. B. Wählinformationen ) zwischen der Teilnehmereinrichtung TE und den Vermittlungsstellen des Fernmeldenetzes steuert.

Der Benutzer gibt zum Verbindungsaufbau zu einem gerufenen Teilnehmer am Fernsprechapparat FEAP die Rufnummer ein und nach hergestellter Verbindung erfolgt die Übertragung der in der Teilnehmereinrichtung TE zwischengespeicherten Nachricht. Dabei erfolgt nach hergestellter Verbindung zwischen den beiden Fernsprechapparaten FEAP durch die Steuereinrichtung ST eine Umlegung dieser Verbindung auf die beiden Anrufbeantworter AB. Nach Umlegung der Verbindung steuern die beiden Steuereinrichtungen ST im Dialog das Auslesen, Übertragen und Speichern der Nachricht.

Ein Anwendungsfall für eine solche Übermittlung zwischengespeicherter Nachrichten ist die Diktatübertragung zwischen den beiden Anrufbeantworten AB, wobei in der gerufenen Teilnehmereinrichtung TE (Schreibbüro) das aufgezeichnete Diktat abgehört und dort in den geschriebenen Text umgesetzt wird. Für diesen Anwendungsfall wird im folgenden die Übermittlung der zwischengespeicherten Nachricht näher beschrieben und erläutert.

Zur Aufzeichnung des analogen Sprachsignals ist als Zwischenspeicher SP in der Teilnehmereinrichtung TE beispielsweise ein Magnetbandspeicher vorgesehen. Anstelle des Magnetbandspeichers kann auch ein Halbleiterspeicher vorgesehen sein, wobei eine Analog-Digital-Umsetzung des über das Mikrofon eingegebenen Sprachsignals vorgenommen wird. Zur Übermittlung des aufgezeichneten Diktats wird vom Benutzer der entsprechende Speicher in den Anrufbeantworter AB eingelegt oder angesteuert. Anschließend leitet der Benutzer durch Eingabe der Rufnummer des gerufenen Teilnehmers einen Verbindungsaufbau ein. Meldet sich der gerufene Teilnehmer, so kündigt der anrufende Teilnehmer diesem die Fernkopie an. Durch Tastenbetätigung der beiden Teilnehmer werden die beiden Anrufbeantworter AB in die gewünschte Betriebsart "Wiedergabe" bzw. "Aufnahme" gebracht. Danach legen die beiden Teilnehmer die Fernhörer der beiden Fernsprechapparate FEAP auf. Das Auslesen, Übertragen und Speichern der Nachricht erfolgt nun im Dialog zwischen den beiden Steuereinrichtungen ST. Hierbei werden zur Steuerung der Übermittlung verschiedene Signale nach einem Mehrfrequenzverfahren benutzt. Dadurch, daß der gerufene Teilnehmer einen unbespielten Magnetbandkassette in den Anrufbeantworter AB eingelegt hat, besteht die Möglichkeit der Übermittlung eines langen Diktats. Die Übertragung dieses langen Diktats wird nach einer bestimmten Zeit durch ein im Anrufbeantworter AB angeordnetes Zeitglied Z unterbrochen, wobei die Steuereinrichtungen ST der beiden Teilnehmereinrichtungen TE dann überprüfen, ob die ursprünglich hergestellte Verbindung noch besteht.

Zu Beginn des Übermittlungsvorgangs erzeugt die Steuereinrichtung ST im gerufenen Anrufbeantworter AB nach dem Auflegen des Fernhörers ein erstes Steuersignal. Die in der rufenden Teilnehmereinrichtung TE angeordnete Steuereinrichtung ST wertet das empfangene erste Steuersignal aus und detektiert das Auflegen des Fernhörers durch den gerufenen Teilnehmer.

Die rufende Teilnehmerstation TE erzeugt während einer Pause des ersten Steuersignals ein zweites Steuersignal und sendet dieses an die gerufene Teilnehmereinrichtung TE. Dieses zweite Steuersignal wird in der gerufenen Teilnehmereinrichtung TE ausgewertet, wobei dieses zweite Steuersignal auch eine Information hinsichtlich der Übertragungsgeschwindigkeit (unterschiedliche Einschreib-/Auslesegeschwindigkeit) enthält. Der Anrufbeantworter AB in der rufenden Teilnehmereinrichtung TE liest die zwischengespeicherte Nachricht aus und diese Nachricht wird über das Fernmeldenetz übertragen und in der gerufenen Teilnehmereinrichtung TE dem Magnetbandspeicher SP zugeführt.

Nach einer bestimmten Zeit, z.B. nach 60 Sekunden, wird die Wiedergabe in der rufenden Teilnehmereinrichtung TE unterbrochen und von der Steuereinrichtung ST wird nach Ablauf von beispielsweise vier Sekunden ein drittes Steuersignal erzeugt. In der gerufenen Teilnehmereinrichtung TE wird die Aufnahme ebenfalls gestoppt und gesteuert durch die Steuereinrichtung ST wird der Magnetbandspeicher um eine Bandlänge entsprechend beispielsweise zwei Sekunden zurückgesetzt.

Weiterhin erzeugt die Steuereinrichtung ST in der gerufenen Teilnehmereinrichtung TE ein viertes Steuersignal und sendet dieses an dieses rufende Teilnehmereinrichtung TE. Beim Empfang des vierten Steuersignals in der rufenden Teilnehmereinrichtung TE startet die rufende Teilnehmereinrichtung TE erneut die Wiedergabe und sendet erneut das zweite Steuersignal an die gerufene Teilnehmereinrichtung TE.

Ist das Ende des zu überspielenden Textes erreicht, so wird dies in der rufenden Teilnehmereinrichtung TE von einem Sprachpausenschalter SPS erkannt. Die Steuereinrichtung ST in der rufenden Teilnehmereinrichtung TE stoppt die Wiedergabe und sendet zur gerufenen Teilnehmereinrichtung TE ein fünftes Steuersignal. Die gerufene Teilnehmereinrichtung TE quittiert den Empfang des fünften Steuersignals durch eine Rückmeldung mit ebenfalls dem fünften Steuersignal. Diese Rückmeldung kann in der Teilnehmereinrichtung TE sowohl optisch als auch akustisch ausgegeben werden. Durch die Rückmeldung besteht dabei auch die Möglichkeit nicht nur die korrekte Übertragung zu quittieren, sondern auch eine Aufforderung zur Wiederholung der Übertragung zu übermitteln.

## Patentansprüche

1. Teilnehmereinrichtung mit einer Steuereinrichtung (ST), welche die verschiedenen Funktionen der Teilnehmereinrichtung (TE) und/oder den Austausch vermittlungstechnischer Informationen über eine einzige Hauptanschlußleitung (AL) zwischen der Teilnehmereinrichtung (TE) und den Vermittlungsstellen des Fernmeldenetzes steuert, wobei anhand der eingegebenen Rufnummern der Verbindungsaufbau zum gerufenen Teilnehmer und nach hergestellter Verbindung die Übertragung der in der Teilnehmereinrichtung (TE) zwischengespeicherten Nachricht erfolgt,
**dadurch gekennzeichnet**, daß die rufende und die gerufene Teilnehmereinrichtung (TE) in an sich bekannter Weise aus der Kombination von Fernsprechapparat (FEAP) und Anrufbeantworter (AB) besteht, welche mit dem Fernmeldenetz über die einzige Hauptanschlußleitung (AL) in Verbindung steht, daß die Steuereinrichtung (ST) die Funktion eines Wählautomatens übernehmen kann, daß nach hergestellter Verbindung zwischen den beiden Teilnehmereinrichtungen (TE) durch die Steuereinrichtungen (ST) automatisch diese Verbindung auf die beiden Anrufbeantworter (AB) umgelegt wird, und daß die Steuereinrichtungen (ST) im Dialog das Auslesen, Übertragen und Speichern der Nachricht steuern, indem durch ein im rufenden Anrufbeantworter (AB) angeordnetes Zeitglied (Z) die Übertragung der Nachrichten jeweils nach einer bestimmten Zeit unterbrochen wird und die Steuereinrichtungen (ST) der beiden Teilnehmereinrichtungen (TE) dann überprüfen, ob die ursprünglich hergestellte Verbindung noch besteht.

2. Teilnehmereinrichtung nach dem Oberbegriff des Anspruchs 1,
**dadurch gekennzeichnet**, daß die rufende und die gerufene Teilnehmereinrichtung (TE) in an sich bekannter Weise aus der Kombination von Fernsprechapparat (FEAP) und Anrufbeantworter (AB) besteht, welche mit dem Fernmeldenetz über die einzige Hauptanschlußleitung (AL) in Verbindung steht und bei welcher der Fernsprechapparat (FEAP) in Vorrang geschaltet ist, daß zum halbautomatischen Austausch von im Anrufbeantworter (AB) zwischengespeicherter Nachrichten zuerst vom Benutzer eine Verbindung zur gerufenen Teilnehmereinrichtung (TE) hergestellt wird, daß durch Tastenbetätigung der beiden Teilnehmer die beiden Anrufbeantworter (AB) in die Betriebsart "Wiedergabe " bzw. " Aufnahme " gebracht und danach die Fernhörer der beiden Fernsprechapparate (FEAP) von den beiden Teilnehmern aufgelegt werden, daß die Steuereinrichtungen (ST) im Dialog das Auslesen, Übertragen und Speichern der Nachricht steuern, wobei zur Steuerung der Übermittlung Signale nach einem Mehrfrequenzverfähren benutzt werden, und daß durch ein im rufenden Anrufbeantworter (AB) angeordnetes Zeitglied (Z) die Übertragung der Nachrichten jeweils nach einer bestimmten Zeit unterbrochen wird und die Steuereinrichtungen (ST) der beiden Teilnehmereinrichtungen (TE) dann überprüfen, ob die ursprünglich hergestellte Verbindung noch besteht.

3. Teilnehmereinrichtung nach Anspruch 1 oder 2,
**dadurch gekennzeichnet**, daß im Anrufbeantworter (AB) ein Sprachpausenschalter (SPS) angeordnet ist, welcher mit der Steuereinheit (ST) verbunden ist und daß nach Beendigung der Nachrichtenübertragung der Sprachpausenschalter (SPS) ein Steuersignal erzeugt, wodurch die beiden Steuereinrichtungen (ST) die bestehende Verbindung auslösen.

4. Teilnehmereinrichtung nach einem oder mehreren der Ansprüche 1 bis 3,
**dadurch gekennzeichnet**, daß die den beiden Teilnehmereinrichtungen (TE) zugeordneten Rufnummern beim Informationsaustausch mitübertragen werden und daß die Steuereinrichtungen (ST) anhand der Rufnummer einmal oder mehrmals nach dem Verbindungsaufbau überprüfen, ob die ursprünglich hergestellte Verbindung immer noch besteht.

5. Teilnehmereinrichtung nach einem oder mehreren der Ansprüche 1 bis 4,
**dadurch gekennzeichnet**, daß mit dem Nachrichtenspeicher (SP) der Teilnehmereinrichtung (TE) eine Einrichtung (VSC) verbunden ist, und daß die Steuereinrichtungen (ST) mit Hilfe dieser Einrichtung (VSC) die durch unterschiedliche Einschreib- /Auslesegeschwindigkeit der Nachricht in und aus dem Nachrichtenspeicher (SP) bedingte Tonhöhenänderung ausgleicht.

## Claims

1. Subscriber device having a control device (ST) which controls the various functions of the subscriber device (TE) and/or the exchange of switching information over a single main access line (AL) between the subscriber device (TE) and the exchanges of the telecommunication network, the connection to the called subscriber being set up on the basis of the subscriber numbers dialled and the message temporarily stored in the subscriber device (TE) being transmitted after the connection has been made, characterized in that the calling and called subscriber device (TE) comprises, in a manner known per se, the combination of telephone set (FEAP) and answering machine (AB), which combination is connected to the telecommunication network via the single main access line (AL), in that the control device (ST) is able to assume the function of an automatic dialling unit, in that, after the connection has been made between the two subscriber devices (TE), said connection is automatically transferred to the two answering machines (AB) by the control device (ST), and in that the control devices (ST) interactively control the reading-out, transmission and storage of the message, the transmission of the messages always being interrupted after a certain time by a timing element (Z) fitted in the calling answering machine (AB) and the control devices (ST) of the two subscriber devices (TE) then checking whether the connection originally made still exists.

2. Subscriber device according to the preamble of Claim 1, characterized in that the calling and called subscriber device (TE) comprises, in a manner known per se, the combination of telephone set (FEAP) and answering machine (AB), which combination is connected to the telecommunication network via the single main access line (AL) and in which combination the telephone set (FEAP) has priority connection, in that, for the purpose of semiautomatic exchange of messages temporarily stored in the answering machine (AB), a connection is first made by the user to the called subscriber device (TE), in that, as a result of key actuation by the two subscribers, the two answering machines (AB ) are set to the "playback" or "record" mode, respectively, and then the telephone receivers of the two telephone sets (FEAP) are replaced by the two subscribers, in that the control devices (ST) interactively control the reading-out, transmission and storage of the message, signals being used according to a multifrequency method to control the transmission, and in that the transmission is always interrupted after a certain time by a timing element (Z) fitted in the calling answering machine (AB) and the control devices (ST) of the two subscriber devices (TE) then checking whether the connection originally made still exists.

3. Subscriber device according to Claim 1 or 2, characterized in that a speech pause switch (SPS) which is connected to the control device (ST) is fitted in the answering machine (AB) and that, after completion of the message transmission, the speech pause switch (SPS) generates a control signal which causes the two control devices (ST) to disconnect the existing connection.

4. Subscriber device according to one or more of claims 1 to 3, characterized in that the subscriber numbers allocated to the two subscriber devices (TE) are concomitantly transmitted during the information exchange and in that the control devices (ST) check once or several times after setting up the connection whether the connection originally made still exists.

5. Subscriber device according to one or more of claims 1 to 4, characterized in that a device (VSC) is connected to the message store (SP) of the subscriber device (TE) and in that, with the aid of said device (VSC), the control device (ST) compensates for the pitch change due to the different speed of writing the message into/reading the message out of the message store (SP).

## Revendications

1. Poste d'abonné comportant un dispositif de commande (ST), qui commande les différentes fonctions du poste d'abonné (TE) et/ou l'échange d'informations techniques de commutation par l'intermédiaire d'une seule ligne de raccordement principale (AL) entre le poste d'abonné (TE) et les centraux du réseau de télécommunication, la transmission de l'information mémorisée temporairement dans le poste d'abonné (TE) s'effectuant sur la base de numéros d'appel introduits de l'établissement de la liaison en direction de l'abonné appelé et après établissement de la liaison, caractérisé en ce que le poste d'abonné appelant (TE) et le poste d'abonné appelé (TE) sont constitués de façon connue en soi par la combinaison d'un poste teléphonique (FEAP) et d'un répondeur téléphonique (AB), qui est reliée au réseau de télécommunication par l'intermédiaire de la ligne de raccordement principal unique (AL), que le dispositif de commande (ST) peut assumer la fonction d'un automate de sélection, qu'après l'établissement de la liaison entre les deux postes d'abonnés (TE), cette liaison est commutée automatiquement, par les dispositifs de commande (ST), sur les deux répondeur téléphoniques (AB) et que les dispositifs de commande (ST) commandent, en mode dialogué, la lecture, la transmission et la mémorisation de l'information, par le fait que la transmission des informations est interrompue par une minuterie (Z) située dans le répondeur téléphonique appelant (AB), respectivement au bout d'un intervalle de temps déterminé et que les dispositifs de commande (ST) des deux postes d'abonnés (TE) vérifient alors si la liaison établie initialement existe encore.

2. Poste d'abonné selon le préambule de la revendication 1, caractérisé en ce que le poste d'abonné appelant (TE) et le poste d'abonné appelé (TE) sont constitués, de façon connue en soi, par la combinaison d'un appareil téléphonique (FEAP) et d'un répondeur téléphonique (AB), qui est reliée au réseau de télécommunication par l'intermédiaire de la ligne de raccordement principale unique (AL) et dans laquelle l'appareil téléphonique (FEAP) est branché de façon prioritaire, que pour l'échange semi-automatique d'informations mémorisées temporairement dans le répondeur téléphonique (AB), une liaison est tout d'abord établie avec le poste d'abonné appelé (TE) par l'utilisateur, que grâce à l'actionnement d'une touche des deux abonnés, les deux répondeurs téléphoniques (AB) sont placés dans le type de fonctionnement "reproduction" ou "enregistrement" et qu'ensuite les écouteurs des deux appareils téléphoniques (FEAP) sont reposés par les deux abonnés, que les dispositifs de commande (ST) commandent en mode dialogué la lecture, la transmission et la mémorisation de l'information, auquel cas pour la commande de la retransmission, on utilise des signaux conformément à un procédé à fréquences multiples, et que la transmission des informations est interrompue par une minuterie (Z) disposée dans le répondeur téléphonique appelant (AB), respectivement au bout d'un intervalle de temps déterminé et que les dispositifs de commande (ST) des deux postes d'abonnés (TE) vérifient alors si la liaison établie initialement existe encore.

3. Poste d'abonné selon la revendication 1 ou 2, caractérisé en ce que dans le répondeur téléphonique (AB) est disposé un commutateur de pauses de conversation (SPS), qui est relié à l'unité de commande (ST) et qu'à la fin de la transmission d'informations, le commutateur de pauses de conversation (SPS) produit un signal de commande qui amène les deux dispositifs de commande (ST) à supprimer la liaison existante.

4. Poste d'abonné selon une ou plusieurs des revendications 1 à 3, caractérisé en ce que les numéros d'appel, qui sont associés aux deux postes d'abonnés (TE), sont transmis conjointement lors de l'échange d'informations et que les dispositifs de commande (ST) vérifient une fois ou à plusieurs reprises, sur la base du numéro d'appel, et ce après l'établissement de la liaison, si la liaison établie initialement existe encore.

5. Poste d'abonné selon une ou plusieurs des revendications 1 à 4, caractérisé en ce qu'un dispositif (VSC) est relié à la mémoire d'informations (SP) du poste d'abonné (TE) et que les dispositifs de commande (ST) compensent à l'aide de ce dispositif (VSC), la modification d'intensité acoustique, qui est conditionnée par une vitesse variable d'enregistrement/lecture de l'information dans et à partir de la mémoire d'informations (SP).
